# DEMANDE DE BREVET EUROPEEN

(11) **EP 3 076 065 A1**
(43) Date de publication de la demande: **05.10.2016**
(21) Numéro de dépôt: 15161556.4
(22) Date de dépôt: 30.03.2015
(51) Int. Cl.: F16M 11/04, F16M 11/20

(54) **TETE PANORAMIQUE 3D**

(71) Demandeur: Breton, Olivier, 1046 Rueyres (CH)
(72) Inventeur: Breton, Olivier, 1046 Rueyres (CH)
(74) Mandataire: Schneiter, Sorin

(57) **Abrégé**

La tête panoramique 3D (1) comporte un support pivotant (3) et un berceau monté sur le support pivotant et agencé pour porter un appareil photographique. Le berceau comporte une bascule de berceau (5) en forme de plaque montée debout de manière à ce que l'axe du support pivotant (3) soit coplanaire avec la bascule de berceau. Cette dernière présentant une portion inférieure convexe (7) en arc de cercle et une portion supérieure droite (9). La portion en arc de cercle est agencée pour coulisser dans un guide solidaire (11) du support pivotant (3). Le guide est associé à un frein commutable entre une position serrée permettant d'immobiliser la bascule de berceau (5), et une position desserrée permettant à la bascule de berceau de coulisser dans le guide (11) de manière à pivoter autour d'un axe (ψ) coupant perpendiculairement l'axe () et le plan de la bascule de berceau (5).

## Description

### DOMAINE DE L'INVENTION

La présente invention concerne une tête panoramique apte à assurer la fixation et le positionnement d'un appareil photographique sur un trépied. La présente invention concerne plus particulièrement une tête panoramique 3D comportant un support pivotant agencé pour être fixé sur le trépied, et un berceau monté sur le support pivotant et agencé pour porter l'appareil photographique.

### ART ANTERIEUR

On a l'habitude de désigner par l'expression « tête panoramique » une tête pivotante pour trépied d'appareil photographique qui donne la possibilité de prendre des photographies de 360° à l'aide de l'appareil photographique monté sur le trépied.

On sait que l'utilisation d'un objectif grand angle ayant une distance focale très courte permet de prendre des photographies avec un angle de champ pouvant aller jusqu'à 180°. Toutefois, de par leur nature, les objectifs grand angle produisent une image déformée de la réalité. Tout grand angle introduit un effet de distorsion qui courbe les lignes droites ne passant pas par le centre de l'image. Une alternative au grand angle, qui permet d'obtenir en principe une image non-déformée, est d'utiliser un appareil photographique monté sur un trépied à tête pivotante, et d'effectuer un balayage du panorama à photographier en prenant une série de clichés décalés angulairement les uns des autres. Les différents clichés doivent ensuite être assemblés avec soin pour obtenir une image panoramique unique. Pour que l'image panoramique soit réussie, il faut naturellement que les clichés s'enchaînent sans discontinuités. Cette exigence peut s'avérer problématique si l'appareil photographique n'était pas correctement centré sur l'axe de la tête pivotante, et qu'en conséquence, les différents clichés n'ont pas été pris exactement depuis le même point. L'homme du métier sait bien que, dans ce contexte, le centre de l'appareil photographique avec son objectif est assimilé à la pupille d'entrée de l'objectif. On comprendra donc qu'une tête panoramique doit permettre de fixer l'appareil photographique de manière à permettre de le faire pivoter avec son objectif autour de la pupille d'entrée.

La figure 1 annexée est une reproduction de la figure 7 du document de brevet US 8,827,577 B2. Cette figure illustre un appareil photographique 110 monté sur une tête panoramique connue. L'appareil photographique est monté pour coulisser sur un premier support pivotant 10. Le premier support pivotant est fixé au sommet d'une barre verticale 100 faisant partie d'une structure en L 100, 102, 104. L'axe du premier support pivotant est orienté horizontalement. La barre horizontale 104 de la structure en L est montée pour coulisser sur un second support pivotant 106 arrangé à la base de la tête panoramique. Grâce aux caractéristiques qui viennent d'être mentionnées, la tête panoramique permet le positionnement de la pupille d'entrée de l'objectif de l'appareil photographique 110 à l'intersection des axes du premier et du second support pivotant.

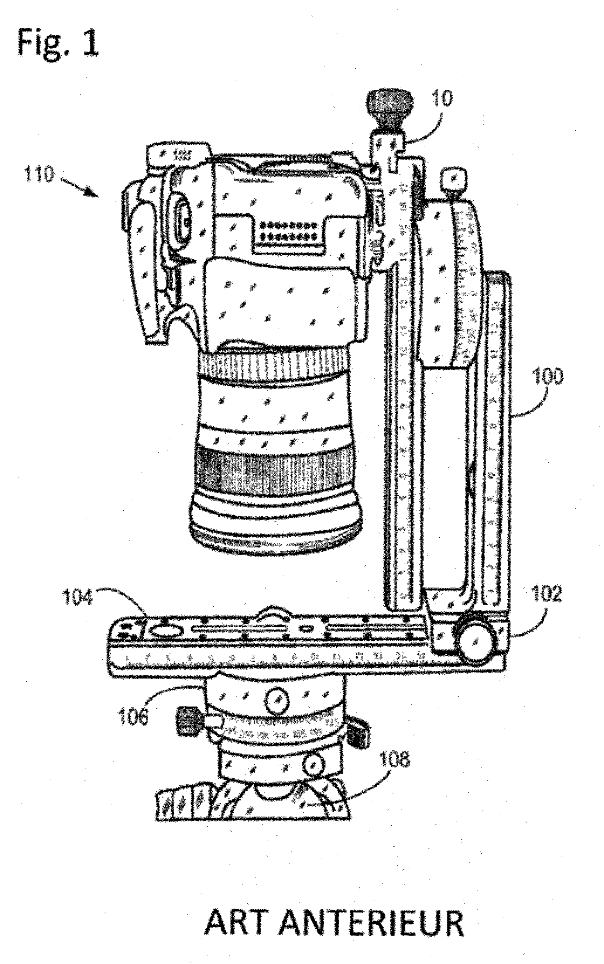

Une tête panoramique qui comprend deux axes de pivotement qui se coupent, comme la tête panoramique qui vient d'être décrite, est appelée une tête panoramique 3D. Vu la longueur totale des barres que comporte la tête panoramique de la figure 1, on n'a aucune peine à comprendre que les têtes panoramiques de l'art antérieur ont tendance à être, soit insuffisamment rigides, soit excessivement lourdes. De plus, elles sont très onéreuses.

### BREF EXPOSE DE L'INVENTION

Un but de la présente invention est de remédier aux inconvénients de l'art antérieur qui viennent d'être mentionnés. La présente invention atteint ce but en fournissant une tête panoramique conforme à la revendication 1 annexée.

Conformément à l'invention, la tête panoramique comporte une bascule de berceau constituée par une plaque montée debout sur le support pivotant de manière à ce que l'axe de rotation du support pivotant soit contenu dans le plan de la plaque. De plus, le berceau de la tête panoramique est agencé pour permettre de maintenir rigidement l'appareil photographique en position, avec son axe optique dans le plan de la plaque.

Conformément à l'invention également, le bord inférieur de la bascule de berceau comporte une portion arrondie convexe qui dessine un arc de cercle. Le centre géométrique de cet arc de cercle est situé au-dessus du bord supérieur de la bascule de berceau, et le berceau est agencé pour permettre de maintenir rigidement l'appareil photographique, de manière à ce que la pupille d'entrée de son objectif soit située au centre géométrique de l'arc de cercle.

Un avantage associé aux caractéristiques qui viennent d'être mentionnées est que la tête panoramique 3D de l'invention ne nécessite pas d'avoir recours à un support pivotant occupant une position décentrée sur le côté de l'appareil photographique. On comprendra donc que l'invention permet d'éviter qu'une pièce délicate, comme le support pivotant de la figure 1 par exemple, n'ait à subir des forces latérales de torsion engendrant un couple trop important.

### BREVE DESCRIPTION DES FIGURES

D'autres caractéristiques et avantages de la présente invention apparaîtront à la lecture de la description qui va suivre, donnée uniquement à titre d'exemple non limitatif, et faite en référence aux dessins annexés dans lesquels :
- la figure 1 est une vue en perspective montrant un appareil photographique monté sur une tête panoramique 3D de l'art antérieur ;
- la figure 2 est une vue en perspective d'une tête panoramique conforme à un mode de réalisation particulier de l'invention ;
- les figures 3A et 3B sont des vues partielles éclatées en perspective de la tête panoramique de la figure 2 respectivement en plongée et en élévation, et montrant plus particulièrement la bascule de berceau, les première et seconde pinces, et le charriot ;
- la figure 4 est une vue partielle éclatée en perspective de la tête panoramique de la figure 2 montrant plus particulièrement le chariot/porte-appareil photographique ;
- la figure 5 est une vue partielle éclatée en perspective de la tête panoramique de la figure 2 montrant plus particulièrement le support pivotant ;
- les figures 6A et 6B sont deux vues en coupe axiale du support pivotant ;
- la figure 7 est une vue éclatée en perspective de la tête panoramique de la figure 2.

### DESCRIPTION DETAILLEE D'UN MODE DE REALISATION

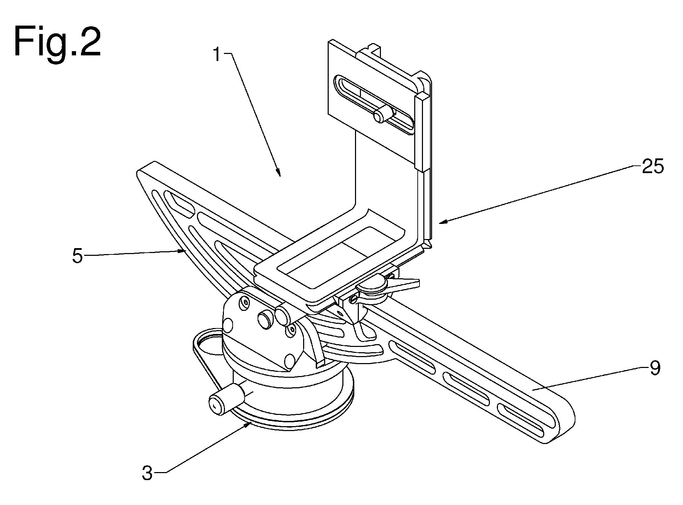

La figure 2 est une vue en perspective d'une tête panoramique 1 conforme à un mode de réalisation particulier de l'invention. La figure montre un support pivotant 3 agencé pour être fixé sur un pied, une bascule de berceau 5 en forme de plaque montée debout sur le support pivotant, et enfin un chariot/porte-appareil photographique 25 agencé pour coulisser sur le bord supérieur rectiligne 9 de la bascule de berceau.

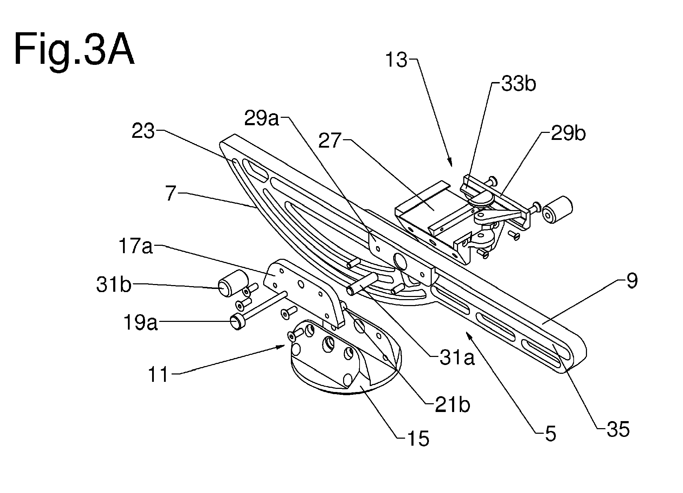

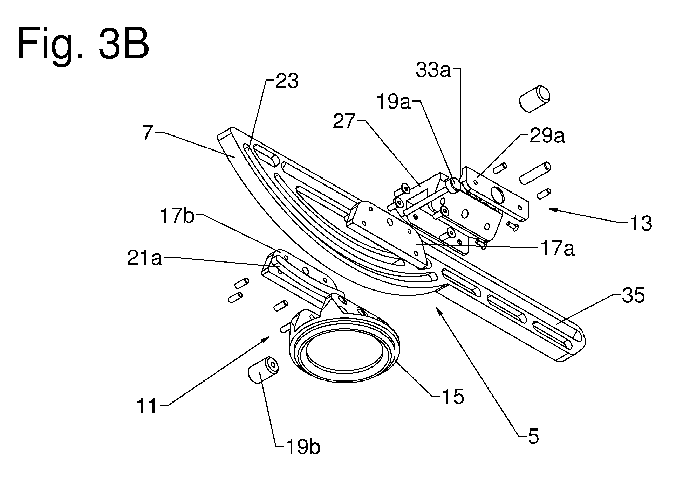

Les figures 3A et 3B sont des vues en éclaté de la tête panoramique de la figure 2, qui montrent en détail les éléments qui constituent la bascule de berceau 5, Le premier ensemble guide-frein 11 et le second ensemble guide-frein 13.

La bascule de berceau 5 est constituée par une plaque dont le pourtour comprend une portion inférieure convexe 7 en arc de cercle et une portion supérieure droite 9. La bascule de berceau est maintenue sur le support pivotant 3 par le premier ensemble guide-frein qui, dans le mode de réalisation illustré, est constitué par une première pince 11. On peut voir sur les figures 3A et 3B notamment, que la première pince comporte tout d'abord une base 15 et deux premières mâchoires 17a, 17b arrangées de part et d'autre de la portion inférieure de la bascule de berceau. On peut voir que la première pince comporte encore une vis de serrage 19a et un écrou moleté 19b. Dans le mode de réalisation illustré, les deux premières mâchoires présentent chacune une languette en arc de cercle (respectivement référencées 21a et 21 b) agencée pour coulisser respectivement à l'intérieur de rainures de forme complémentaire que présentent les deux faces de la bascule de berceau 5 (une seule rainure référencée 23 est visible sur les figures). On peut voir sur les figures que la rainure 23 s'étend en arc de cercle parallèlement au bord inférieur 7 de la bascule de berceau. On comprendra que, de manière équivalente, les deux rainures pourraient être remplacées, sur une partie au moins de leur longueur, par une seule fente en arc de cercle qui traverserait la bascule de berceau de part en part.

Selon une variante avantageuse du mode de réalisation du présent exemple, la base 15 et la bascule de berceau 5 sont réalisées en aluminium. Selon une autre variante avantageuse, les mâchoires 17a, 17b sont réalisées en un matériau polymère ; en polyformaldéhyde (POM) par exemple. Selon une variante préférée, la base 15 et la bascule de berceau 5 sont réalisées en aluminium et les mâchoires 17a, 17b sont réalisées en polymère. Quant à la vis de serrage 19a et à son écrou 19b, ils peuvent être réalisés en acier inox par exemple.

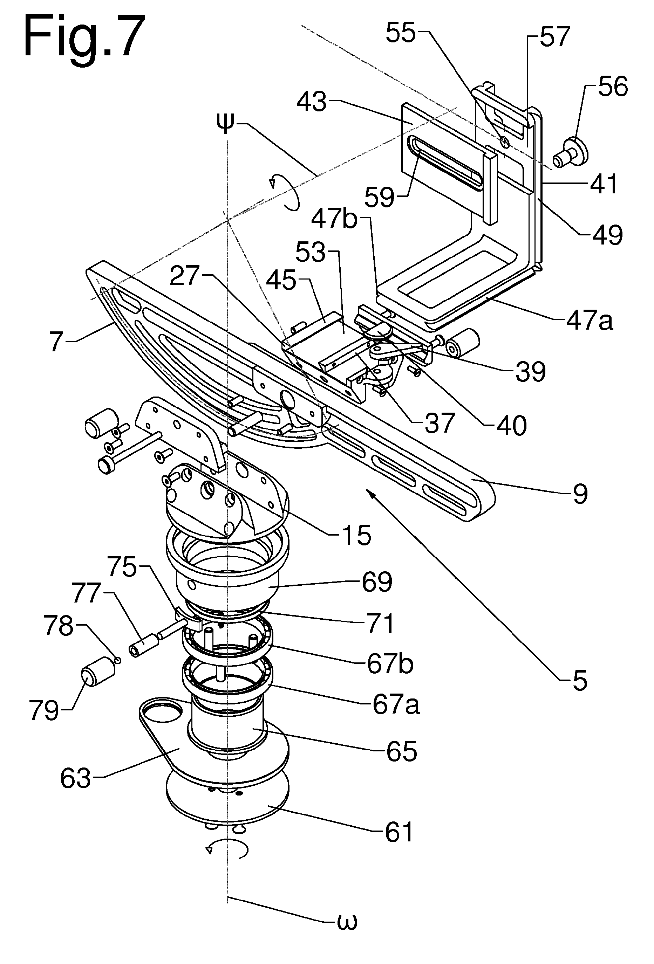

La première pince 11 est agencée de manière à ce que l'espacement entre les deux premières mâchoires 17a, 17b puisse être ajusté par un utilisateur à l'aide de l'écrou moleté 19b de la vis de serrage 19a. En serrant l'écrou, l'utilisateur peut amener les premières mâchoires dans un état d'ajustement serré dans lequel elles pincent fortement le pourtour de la bascule de berceau 5 de manière à maintenir rigidement cette dernière. Inversement, en desserrant l'écrou 19b, l'utilisateur peut amener les premières mâchoires dans un état d'ajustement libre dans lequel les languettes 21 a, 21 b sont libres de coulisser le long des rainures 23 en arc de cercle de la bascule de berceau, de sorte que cette dernière peut s'incliner en pivotant autour d'un axe qui lui est perpendiculaire et qui passe par le centre géométrique de l'arc de cercle formé par la portion inférieure convexe 7 (cet axe est montré à la figure 7, dans laquelle il est représenté par une droite en traits mixtes référencée ψ). On peut comprendre de la figure 7 que, dans l'exemple illustré, l'axe perpendiculaire autour duquel la bascule de berceau pivote est situé nettement au-dessus du bord supérieur 9 de celle-ci.

Selon une autre variante avantageuse du mode de réalisation illustré, une des premières mâchoires 17a est fixe relativement à la base 15, alors que l'autre première mâchoire 17b est mobile relativement à la base de manière permettre le serrage et le desserrage de la première pince 11. Selon un autre mode de réalisation (non représenté) de l'invention, la première pince est associée à une surface de guidage arrangée entre les deux mâchoires de manière à coopérer avec le bord inférieur arrondi de la bascule de berceau. Selon ce mode de réalisation, la portion en arc de cercle du pourtour de la bascule de berceau peut coulisser entre les mâchoires de la pince en glissant contre la surface de guidage. On comprendra que ce mode de réalisation permet éventuellement de se dispenser des languettes 21 a, 21 b et des rainures 23. Alternativement, au lieu de glisser, la portion en arc de cercle du pourtour de la bascule de berceau pourrait rouler sur au moins deux rouleaux associés à la pince. Selon cette dernière variante, la surface de guidage serait donc remplacée par une pluralité de rouleaux.

La bascule de berceau 5 est agencée pour supporter le chariot/porte-appareil photographique 25. Celui-ci est maintenu sur la bascule de berceau par le second ensemble guide-frein qui, dans le mode de réalisation illustré, est constitué par une seconde pince (globalement référencée 13 dans les figures 3A et 3B). On peut voir sur les figures que la seconde pince comporte un chariot 27, deux secondes mâchoires 29a, 29b, et une vis de serrage 31a avec son écrou moleté 31 b. Dans le mode de réalisation illustré, les deux secondes mâchoires présentent chacune une languette rectiligne (respectivement référencées 33a et 33b) agencée pour coulisser respectivement à l'intérieur de deux rainures de forme complémentaire que présente la bascule de berceau 5 (une seule rainure référencée 35 est visible sur les figures). On peut voir également que la rainure 35 s'étend en ligne droite parallèlement au bord supérieur 9 de la bascule de berceau. En se référant toujours aux figures 3A et 3B, on peut voir que lorsque la seconde pince 13 est en place sur la bascule de berceau 5, le charriot 27 chevauche son bord supérieur rectiligne 9, celui-ci remplissant alors la fonction d'un rail pour le chariot. On peut voir de plus que les secondes mâchoires 29a, 29b s'étendent vers le bas de part et d'autre de la bascule de berceau.

En se référant toujours aux mêmes figures, on peut observer que la portion supérieure droite 9 du pourtour de la bascule de berceau 5 a une longueur supérieure à la longueur d'arc de la portion inférieure convexe 7 en arc de cercle. On peut observer de plus que, dans le mode de réalisation illustré, la bascule de berceau 5 présente un profil asymétrique, l'axe du support pivotant 3 coupant notamment la portion supérieure droite 9 en un point éloigné du centre de cette dernière (l'axe de pivotement du support 3 est montré à la figure 7, dans laquelle il est représenté par une droite en traits mixtes référencée *ω*). On notera que les figures représentent la bascule de berceau 5 en position « horizontale » de sorte que la portion supérieure droite 9 est représentée perpendiculaire à l'axe. Toutefois, on comprendra que le point d'intersection entre l'axe et la portion supérieure droite 9 se déplace lorsque l'inclinaison de la bascule de berceau par rapport à l'axe ψ change. Dans le cas où la base 15 et la bascule de berceau 5 sont réalisées en aluminium, le chariot 27 est de préférence également réalisé en aluminium. De plus, les secondes mâchoires 29a, 29b comme les premières, peuvent être réalisées en un matériau polymère ; en particulier en polyformaldéhyde (POM). Selon une variante préférée, le chariot 27 et la bascule de berceau 5 sont réalisées en aluminium et les mâchoires 29a, 29b sont réalisées en polymère. Quant à la vis de serrage 31 a et à son écrou 31 b, ils peuvent être réalisés en acier inox par exemple.

La seconde pince 13 est agencée de manière à ce que l'espacement entre les deux secondes mâchoires 29a, 29b puisse être ajusté par un utilisateur à l'aide de l'écrou moleté 31 b de la vis de serrage 31 a. En serrant l'écrou, l'utilisateur peut amener les secondes mâchoires dans un état d'ajustement serré dans lequel elles pincent fortement le pourtour de la bascule de berceau 5 de manière à ce que la seconde pince 13 et le chariot 27 soient rigidement fixés sur cette dernière. Inversement, en desserrant l'écrou 31 b, l'utilisateur peut amener les secondes mâchoires dans un état d'ajustement libre dans lequel les languettes 33a, 33b sont libres de coulisser le long des rainures rectilignes 35 de la bascule de berceau 5, de sorte que le chariot 27 se déplace en translation le long du bord supérieur 9 de la bascule de berceau. Selon encore une autre variante avantageuse du mode de réalisation illustré, une des secondes mâchoires 29a est fixe relativement au chariot 27, alors que l'autre seconde mâchoire 29b est mobile relativement au chariot de manière permettre le serrage et le desserrage de la seconde pince 13.

Selon encore un autre mode de réalisation (non représenté), la seconde pince est associée à une surface de guidage arrangée entre les deux mâchoires de manière à coopérer avec le bord supérieur rectiligne de la bascule de berceau. Selon ce mode de réalisation, le chariot 27 peut glisser sur le côté supérieur rectiligne de la bascule de berceau. On comprendra que ce mode de réalisation permet éventuellement de se dispenser des languettes 33a, 33b et des rainures 35. Alternativement, le chariot pourrait comporter au moins deux rouleaux sur lesquels il pourrait ainsi rouler au lieu de glisser.

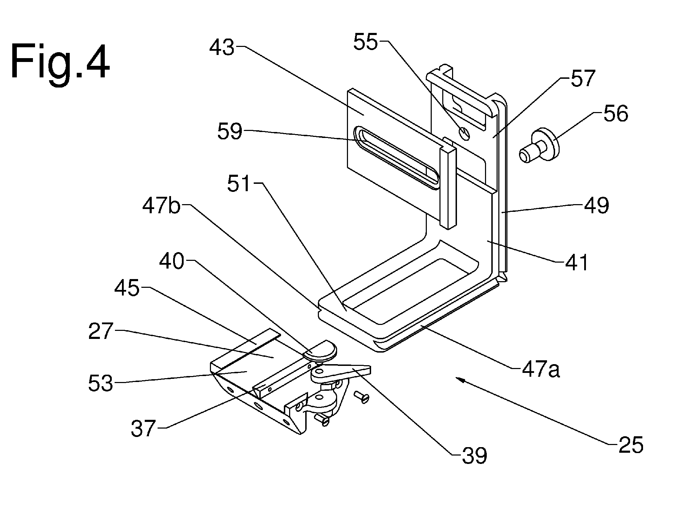

La figure 4 illustre le chariot/porte-appareil photographique 25 de la tête panoramique 1 qui fait l'objet de la présente description qui est donnée uniquement à titre d'exemple. Outre le chariot 27 proprement dit, le chariot/porte-appareil photographique comprend une éclisse 37, un excentrique de serrage 39, une vis 40, une pièce support coudée 41 composée d'une lame verticale 49 et d'une lame horizontale 51, une équerre 43, et enfin une vis de fixation standard 56. On peut voir en outre que le chariot présente sur le dessus une glissière rectiligne 45, qui est orientée transversalement à la direction de déplacement du chariot (c'est-à-dire parallèlement à l'axe ψ autour duquel la bascule de berceau 5 est agencée pour pivoter lorsqu'on fait varier l'inclinaison de cette dernière). L'éclisse 37 est agencée pour être montée sur le dessus du chariot parallèlement et en regard de la glissière rectiligne 45. On peut voir que la glissière et l'éclisse présentent toutes les deux un profil qui va en s'élargissant en direction du haut, de sorte qu'elles définissent entre elles sur le dessus du chariot 27 un chenal 53 ayant un profil en queue d'aronde. La pièce support coudée 41 est agencée pour être insérée dans le chenal 53. A cet effet, la lame horizontale 51 de la pièce 41 présente deux gorges longitudinales 47a, 47b qui sont aménagées de part et d'autre, le long des deux bords latéraux de la lame 51. Les deux gorges 47a, 47b ont des profils complémentaires à ceux des deux bords du chenal 53, de sorte que la lame horizontale est guidée horizontalement et peut coulisser dans le chenal.

En se référant encore à la figure 4, on peut voir que l'excentrique de serrage 39 est pivoté sur le dessus du chariot 27 au moyen de la vis 40. L'excentrique de serrage est agencé pour coopérer avec l'éclisse 37 de manière à permettre à un utilisateur d'ajuster la largeur du chenal 53 entre la glissière 45 et l'éclisse 37 en tournant l'excentrique 39. En faisant pivoter l'excentrique dans un premier sens, l'utilisateur peut amener l'éclisse 37 et la glissière 45 dans un état d'ajustement serré avec la lame horizontale 51 de manière à maintenir rigidement la pièce coudée 41 sur le chariot 27. En faisant pivoter l'excentrique 39 dans l'autre sens, l'utilisateur peut donner un certain jeu à l'éclisse de sorte que la lame horizontale 51, la glissière 45 et l'éclisse 37 se trouvent dans un état d'ajustement libre. La lame horizontale 51 est alors libre de coulisser dans le chenal 53, transversalement à la direction de déplacement du chariot.

La pièce coudée 41 est agencée pour servir de support à l'appareil photographique (non représenté). En se référant encore à la figure 4, on peut voir que lame verticale 49 de la pièce support coudée 41 présente à cet effet un trou circulaire 55. Les dimensions du trou 55 sont adaptées pour lui permettre de recevoir la vis de fixation standard 56. Il peut s'agir typiquement d'une vis moletée avec un filetage de norme 1/4-20 UNC. En effet, la plupart des appareils photographiques grand-public sont prévus pour être fixés avec ce type de vis. On peut observer encore que le trou 55 est situé au centre d'un évidement 57 en forme de chenal formé dans la lame verticale 49. On peut comprendre de plus que l'équerre 43 est conformée de manière à pouvoir s'insérer dans l'évidement 57 et à pouvoir se décaler en translation à l'intérieur de l'évidement. L'équerre 43 est percée d'un oblong 59 qui est agencé de manière à se superposer au trou 55 lorsque l'équerre est insérée dans l'évidement 57. On comprendra que lorsque l'appareil photographique est vissé sur le chariot/porte-appareil photographique à l'aide de la vis 56, l'équerre 43 se trouve comprimée entre la pièce de support coudée 41 et l'appareil photographique. La fonction de l'équerre est de bien caler l'appareil photographique en position avec son axe optique parallèle au plan principal de l'équerre 43.

On peut comprendre des explications ci-dessus que le berceau/porte-appareil photographique 25 est agencé pour permettre de maintenir rigidement un appareil photographique, de manière à ce que son axe optique soit situé dans le plan de la bascule de berceau 5 et à ce que la pupille d'entrée de son objectif soit située au centre de courbure de l'arc de cercle constitué par la portion inférieure convexe 7 de la bascule de berceau. En effet, l'utilisateur à la possibilité de décaler latéralement l'appareil photographique de manière à amener son axe optique dans le plan de la bascule de berceau 5. Pour ce faire, il lui suffit de desserrer l'excentrique 39 et de faire coulisser la lame horizontale 51 dans le chenal 53. De plus, l'utilisateur a également la possibilité d'amener la pupille d'entrée de l'objectif de l'appareil photographique en superposition avec l'axe ψ de pivotement du berceau en desserrant l'écrou 31 b de la vis de serrage 31 a et en faisant glisser le chariot 27 en translation le long du bord supérieur 9 de la bascule de berceau 5.

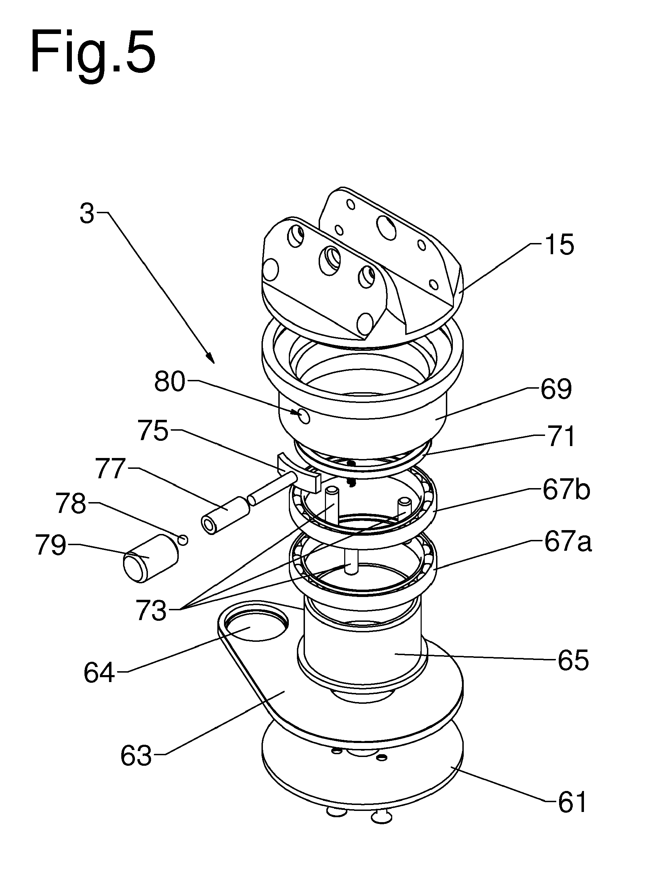

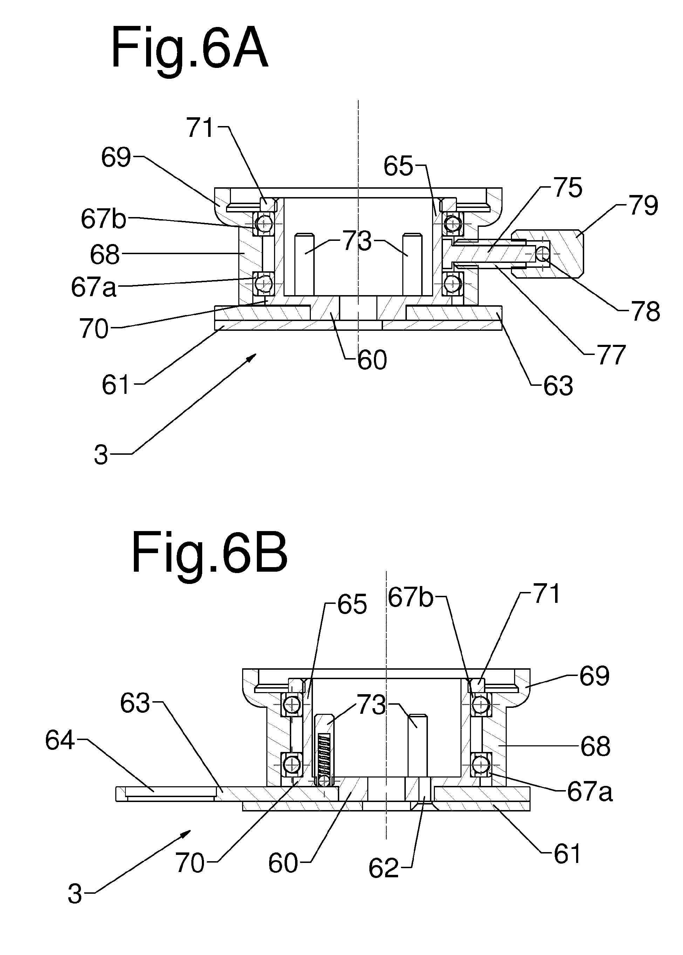

Les figures 5, 6A et 6B illustrent le support pivotant 3 de la tête panoramique 1 qui fait l'objet de la présente description donnée uniquement à titre d'exemple. Outre la base 15 du berceau qui a déjà été mentionnée plus haut, le support pivotant 3 comprend une assise 61, un vernier gradué 63, un niveau à bulle 64, un corps central 65, deux roulements à billes 67a, 67b, un corps extérieur 69, une bague de fixation 71, trois vis à bille-ressort 73, un sabot d'arrêt 75, un implant à pas fin 77, et enfin un écrou de serrage 79 avec une bille 78.

La figure 6A est une vue en coupe axiale du support pivotant. On peut voir que dans le mode de réalisation illustré le corps central 65 et le corps extérieure 69 ont tous les deux approximativement une forme de cylindre évidé, et qu'ils sont assemblés concentriquement l'un à l'autre par l'intermédiaire des deux roulements à billes 67a et 67b. Le corps extérieur peut donc tourner librement autour du corps central.

On peut voir également que la paroi intérieure du corps extérieur 69 présente un double épaulement définissant une nervure intermédiaire 68 qui remplit la fonction d'entretoise entre les bagues extérieures des deux roulements à billes 67a, 67b. On peut voir de plus que la bague intérieure du roulement à billes inférieur 67a vient en appuis sur une collerette 70 que présente le corps central 65. La bague extérieure du roulement à billes 67a est donc retenue par le dessus, alors que la bague intérieure du roulement est retenue par le dessous. On comprendra donc que, si le roulement à billes 67a est comprimé entre ses deux zones d'appui, la résultante des forces est orientée obliquement.

D'autre part, on peut voir également que la bague intérieure du roulement à billes supérieure 67b vient en appui contre la bague de fixation 71. La bague intérieure du roulement à billes 67b est donc retenue par le dessous, alors que la bague extérieure du roulement vient en appui par le dessous. On comprendra donc que la résultante des forces qui s'exercent sur le roulement à billes supérieur 67b est orientée obliquement, l'inclinaison étant en opposition avec celle de la résultante des forces s'exerçant sur le roulement à billes inférieure. Cet arrangement présente l'avantage de permettre de minimiser le jeu interne des roulements à billes en comprimant plus ou moins les roulements 67a, 67b à l'aide de la bague de fixation 7. Grâce à cette construction, le dispositif de pivotement 3 peut tourner avec un minimum de jeu.

En se référant encore aux figures 5 et 6A, on peut voir que le dispositif de pivotement 3 comporte un mécanisme de blocage à vis qui est constitué par le sabot d'arrêt 75, l'implant à pas fin 77, ainsi que l'écrou de serrage 79 avec sa bille 78. Comme le montre la figure 5, le sabot d'arrêt comporte une plaquette de forme arquée dont la courbure est adaptée pour lui permettre de venir se plaquer contre la paroi externe cylindrique du corps central 65. On peut voir également que la paroi cylindrique du corps extérieur 69 présente un trou circulaire taraudé 80. De plus, le sabot d'arrêt 75 est muni d'un bras en forme de tige cylindrique qui s'étend radialement vers l'extérieur. Ce bras passe à travers le trou 80.

On peut voir encore que l'implant à pas fin 77 a la forme d'un manchon qui présente un filetage à chacune de ses extrémités. L'implant 77 est vissé dans le trou taraudé 80 par une première extrémité, alors que la seconde extrémité, dont le filetage a de préférence un pas plus fin, est agencée pour recevoir l'écrou de serrage 79. L'écrou de serrage présente un alésage cylindrique dont les dimensions sont adaptées pour recevoir l'extrémité distale du bras en forme de tige cylindrique. On peut voir que l'alésage s'élargit, proche de son embouchure, pour former un lamage coaxial, et que la paroi latérale du lamage présente un taraudage prévu pour recevoir la seconde extrémité filetée de l'implant 77. La bille 78 est intercalée entre l'extrémité du bras en forme de tige cylindrique et le fond de l'alésage. Lorsqu'un utilisateur visse l'écrou 79 sur la seconde extrémité de l'implant 77, l'avancée de l'écrou a pour effet de pousser le sabot d'arrêt 75 en direction de la paroi cylindrique du corps central 65. La face recourbée du sabot vient ainsi presser contre la paroi extérieure du corps central de manière à empêcher toute rotation de celui-ci relativement au corps extérieur 69.

En se reportant maintenant aux figures 5 et 6B, on peut voir que le corps central 65 de forme généralement cylindrique comporte un fond, et que ce fond présente un épaulement circulaire délimitant une zone périphérique d'une zone centrale référencée 60. Comme on peut le voir, l'épaisseur du fond dans la zone centrale est plus importante que dans la zone périphérique. La zone centrale comporte trois trous taraudés (dont un seul, référencé 62, est visible). Les trois trous taraudés 62 sont agencés pour recevoir des vis (non représentées) prévues pour fixer rigidement le corps central sur l'assise 61. On comprendra toutefois qu'il est également possible de fixer rigidement le corps central à l'assise sans recourir à des vis. Par exemple, selon une variante non représentée, la liaison mécanique entre le corps central et l'assise pourrait être réalisée à l'aide d'une fixation à queue d'aronde. En se référant encore à la figure 6B, on peut voir que le vernier gradué 63 est inséré entre fond du corps central 65 et l'assise 63. Comme le montre la figure, la zone centrale 60 du fond traverse une ouverture circulaire du vernier dont le bord entoure l'épaulement. Le vernier gradué est donc maintenu pivotant entre la zone périphérique du fond et l'assise 61.

En se référant toujours aux mêmes figures, on peut voir que les trois vis à bille-ressort 73 sont insérées chacune dans un trou traversant (non référencé) taraudé de la zone périphérique du fond du corps central 65. Ainsi, la bille de chacune des trois vis à bille-ressort est rappelée par son ressort contre la surface du vernier gradué 63. La pression exercée par les trois billes a pour effet, d'une part, d'écarter légèrement le vernier du fond du corps central et, d'autre part, d'éviter tout contact entre le vernier est le bord inférieur du corps extérieur 69. Ainsi, le vernier ne risque pas d'être entraîné en rotation par le corps extérieur. De plus, il est possible de faire pivoter le vernier gradué autour de l'axe du dispositif de pivotement 3 sans effort excessif. En effet, le dessus du vernier 63 vient en appui sur les trois billes au lieu de frotter contre le fond du corps central. On notera finalement que, dans le mode de réalisation représenté, le vernier gradué comporte un niveau à bulle 64. La présence du niveau à bulle facilite le positionnement de la tête panoramique, lorsqu'on désire que l'axe de pivotement du dispositif de pivotement 3 soit bien vertical.

On comprendra en outre que diverses modifications et/ou améliorations évidentes pour un homme du métier peuvent être apportées au mode de réalisation qui fait l'objet de la présente description sans sortir du cadre de la présente invention définie par les revendications annexées. En particulier, des modes de réalisation particuliers de l'invention comportent un dispositif de pivotement extrêmement différent du dispositif de pivotement 3 qui a été décrit en relation avec les figures 5, 6A et 6B. L'invention pourrait en effet mettre ne oeuvre tout dispositif de pivotement connu de l'homme du métier et que ce dernier jugerait convenable.

## Revendications

1. Tête panoramique (1) apte à assurer la fixation et le positionnement d'un appareil photographique sur un trépied, et comportant un support pivotant (3) agencé pour être fixé sur le trépied et un berceau agencé pour porter l'appareil photographique, le berceau étant agencé sur le support pivotant de manière à permettre à l'axe optique de l'appareil photographique d'intersecter l'axe de pivotement () du support pivotant ; **caractérisée en ce que** le berceau comporte :
➢ une bascule de berceau (5) en forme de plaque montée debout sur le support pivotant (3) de manière à ce que l'axe () du support pivotant soit coplanaire avec la bascule de berceau, la bascule de berceau présentant un pourtour comprenant une portion inférieure convexe (7) en arc de cercle et une portion supérieure droite (9) ;
➢ un premier ensemble guide-frein (11) comprenant un premier guide solidaire du support pivotant (3) et agencé pour coopérer avec le pourtour de la bascule de berceau (5) de manière à ce que la portion convexe (7) en arc de cercle puisse coulisser dans le premier guide, et comprenant un premier frein commutable manuellement entre un position serrée permettant d'immobiliser rigidement la bascule de berceau relativement au support pivotant, et une position desserrée permettant à la bascule de berceau de coulisser dans le guide de manière à pivoter autour d'un axe (ψ) coupant perpendiculairement l'axe () du support pivotant (3) et le plan de la bascule de berceau (5) ;
➢ un chariot/porte-appareil photographique (25) et un second ensemble guide-frein (13) comprenant un second guide solidaire du chariot/porte-appareil photographique (25) et agencé pour coopérer avec le pourtour de la bascule de berceau (5) de manière à ce que le chariot/porte-appareil photographique (25) puisse coulisser relativement à la bascule de berceau, et comprenant un second frein commutable manuellement entre une position serrée permettant de solidariser rigidement le chariot/porte-appareil photographique et la bascule de berceau, et une position desserrée permettant de faire coulisser le chariot/porte-appareil photographique (25) le long de la portion supérieure droite (9) ;
et **en ce que** le chariot/porte-appareil photographique (25) est agencé pour permettre de maintenir l'appareil photographique de manière à ce que l'axe optique soit compris dans le plan de la bascule de berceau (5).

2. Tête panoramique (1) selon la revendication 1, **caractérisée en ce que** la portion supérieure droite (9) du pourtour de la bascule de berceau (5) a une longueur supérieure à la longueur d'arc de la portion inférieure convexe (7) en arc de cercle.

3. Tête panoramique (1) selon la revendication 1 ou 2, **caractérisée en ce que** l'axe () du support pivotant (3) coupe la portion supérieure droite (9) du pourtour de la bascule de berceau (5) en position décentrée lorsque la bascule de berceau est pivotée de manière à ce que la portion supérieure droite soit perpendiculaire à l'axe () du support pivotant.

4. Tête panoramique (1) selon l'une des revendications 1, 2 et 3, **caractérisée en ce que** ledit axe (ψ), autour duquel la bascule de berceau (5) peut pivoter en coulissant dans le premier guide, ne traverse pas la bascule de berceau, mais passe au contraire au-dessus de celle-ci.

5. Tête panoramique (1) selon l'une des revendications précédentes, **caractérisée en ce que** le premier ensemble guide-frein (11) comporte une première pince solidaire du support pivotant (3) et comportant une paire de premières mâchoires (17a, 17b) ayant un espacement ajustables manuellement entre un ajustement serré permettant de maintenir rigidement la bascule de berceau (5) par la portion en arc de cercle (7), et un ajustement libre permettant à la bascule de berceau de pivoter autour du dit axe (ψ) coupant perpendiculairement l'axe () du support pivotant (3) et le plan de la bascule de berceau (5).

6. Tête panoramique (1) selon la revendication 5, **caractérisée en ce que** la portion inférieure convexe (7) en arc de cercle de la bascule de berceau (5) comporte deux rainures (23) en arc de cercle arrangées respectivement sur les deux faces principales de la bascule de berceau (5) parallèlement aux bords de la portion inférieure (7), et **en ce que** les deux premières mâchoires (17a, 17b) présentent chacune une languette en arc de cercle (21 a, 21 b) agencée pour coulisser respectivement à l'intérieur des deux rainures (23).

7. Tête panoramique (1) selon l'une des revendications précédentes, **caractérisée en ce que** le second ensemble guide-frein (13) comporte une seconde pince solidaire du chariot/porte-appareil photographique (25) et comportant une paire de secondes mâchoires (29a, 29b) ayant un espacement ajustable manuellement entre un ajustement serré permettant d'immobiliser le chariot/porte-appareil photographique (25) par pincement de la bascule de berceau (5), et un ajustement libre permettant de faire coulisser le chariot/porte-appareil photographique (25).

8. Tête panoramique (1) selon la revendication 7, **caractérisée en ce que** la portion supérieure rectiligne (9) de la bascule de berceau (5) comporte deux rainures rectilignes (35) arrangées respectivement sur les deux faces principales de la bascule de berceau (5) parallèlement aux bords de la portion supérieure (9), et **en ce que** les deux secondes mâchoires (29a, 29b) présentent chacune une languette rectiligne (33a, 33b) agencée pour coulisser respectivement à l'intérieur des deux rainures (35).

9. Tête panoramique (1) selon l"un des revendications précédentes, **caractérisée en ce que** le chariot/porte-appareil photographique (25) comporte un chariot (27) et une pièce de fixation coudée (41) montée coulissante sur le chariot et comprenant une lame montante (49) et une lame transversale (51), la lame montante étant agencée pour supporter l'appareil photographique avec l'axe optique de l'objectif orienté parallèlement à la portion supérieure rectiligne (9) du pourtour de la bascule de berceau (5), et la lame transversale (51) étant agencée pour coulisser sur le chariot (27) transversalement à la portion supérieure rectiligne (9), de manière à permettre de décaler l'axe optique de l'appareil photographique transversalement au plan de la bascule de berceau.
